# EUROPEAN PATENT APPLICATION

(11) **EP 1 693 945 A1**
(43) Date of publication of application: **23.08.2006**
(21) Application number: 04793101.9
(22) Date of filing: 28.10.2004
(51) Int. Cl.: H02K 9/02

(54) **PULSE GENERATOR CIRCUIT**

(30) Priority: 28.10.2003 JP 2003366815
(71) Applicant: NGK INSULATORS, LTD., Nagoya-City, Aichi Pref. 467-8530 (JP)
(72) Inventor: HATANO, Tatsuhiko NGK INSULATORS, LTD., Nagoya-shi, Aichi 4678530 (JP); SAKUMA, Takeshi NGK INSULATORS, LTD., Nagoya-shi, Aichi 4678530 (JP)
(74) Representative: Paget, Hugh Charles Edward
(86) International application number: PCT/JP2004/015993
(87) International publication number: WO 2005/041389

(57) **Abstract**

A pulse generator circuit (10) comprises a DC power supply (12) (power supply voltage = V); a transformer (14) series connected across the DC power supply (12); and a single switch (16); wherein an output is derived from the two ends of a secondary winding (18) of the transformer (14). While the switch (16) is on-state, a pulse of negative polarity is outputted from the two ends of the secondary winding (18). When the switch (16) is turned off, a discharging to a resistive load (20) is commenced and an induced electromotive force occurring in the transformer (14) causes the output voltage to abruptly rise, thereby outputting a pulse of positive polarity.

## Description

### TECHNICAL FIELD

The present invention relates to a pulse generating circuit for successively outputting a pulse of positive polarity and a pulse of negative polarity.

### BACKGROUND ART

In recent years, technologies for deodorization, sterilization, film formation, and toxic gas decomposition based on a plasma produced by discharging high-voltage pulses have been put to practical use (see, for example, Patent Document 1 and Non-patent Document 1). It has been recognized that it is necessary to supply high-voltage pulses of very short pulse duration for efficient plasma processing (see, for example, Non-patent Document 2).

Patent Document 1: Japanese Patent No. 2649340 (lines 3 through 41, column 8);

Non-patent Document 1: OYO BUTURI, Vol. 61, No. 10, 1992, pages 1039 through 1043, "Deposition of a-Si: H based film by high voltage pulse discharge CVD";

Non-patent Document 2: IEEE TRANSACTION ON PLASMIC SCIENCE, Vol. 28, No. 2, April 2000, pages 434 through 442, "Improvement of NOx Removal Efficiency Using Short-Width Pulsed Power".

### DISCLOSURE OF THE INVENTION

### PROBLEMS TO BE SOLVED BY THE INVENTION

A pulse power supply is used for generating a plasma by changing an electric field to accelerate electrons. The pulse power supply employs a process of successively outputting pulses of opposite polarities, i.e., a pulse of positive polarity and a pulse of negative polarity, in order to generate a high potential difference with a low voltage.

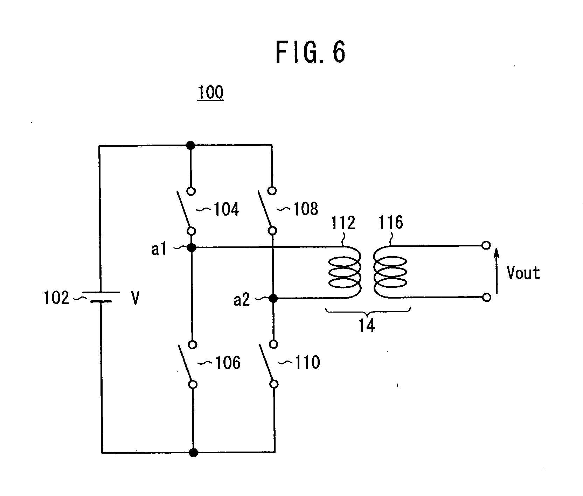

As shown in FIG. 6, for example, a conventional pulse generating circuit 100 according to the above process has a DC power supply 102, a first switch 104 and a second switch 106 which are connected in series across the DC power supply 102, a third switch 108 and a fourth switch 110 which are connected in series across the DC power supply 102, and a transformer 114 having a primary winding 112 connected between a contact a1 interconnecting the first switch 104 and the second switch 106 and a contact a2 interconnecting the third switch 108 and the fourth switch 110. The conventional pulse generating circuit 100 is of a bridge configuration. An output voltage Vout is produced across a secondary winding 116 of the transformer 114.

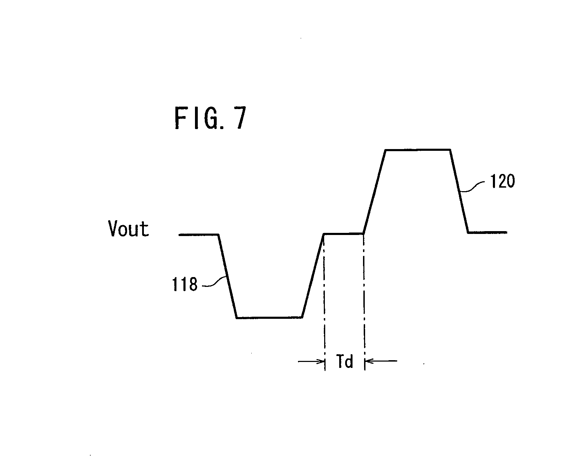

When the second switch 106 and the third switch 108 are turned on, a negative pulse 118 is output across the secondary winding 116 of the transformer 114 as shown in FIG. 7. When the second switch 106 and the third switch 108 are turned off and the first switch 104 and the fourth switch 110 are turned on, a positive pulse 120 is output across the secondary winding 116.

However, the conventional pulse generating circuit 100 is disadvantageous in that since it is constructed as a bridge, the four switches 104, 106, 108, 110 need to be used, resulting in a large number of parts required.

Furthermore, the conventional pulse generating circuit 100 is also problematic in that it is necessary to provide a dead time Td between the time when the second switch 106 and the third switch 108 are turned off and the time when the first switch 104 and the fourth switch 110 are turned on, and a sharp voltage change cannot be obtained when the negative pulse 118 changes to the positive pulse 120.

The present invention has been made in view of the above drawbacks. It is an object of the present invention to provide a pulse generating circuit which is effective in reducing the number of parts used and which is capable of obtaining a sharp voltage change when the pulse waveform is changed.

### MEANS FOR SOLVING THE PROBLEMS

According to the present invention, a pulse generating circuit for successively outputting a pulse of positive polarity and a pulse of negative polarity comprises a transformer and a single switch which are connected in series across a DC power supply, wherein an output is produced across a secondary winding of the transformer. The switch preferably comprises a semiconductor switch.

Either one of the pulse of positive polarity and the pulse of negative polarity is output in a period during which the switch is turned on, and a pulse of opposite polarity is output due to electromotive forces induced when the switch is turned off.

According to the present invention, since a pulse of positive polarity or a pulse or negative polarity changes to a pulse of opposite polarity when the single switch is operated, the number of parts used is greatly reduced, and no dead time is provided when the pulse changes. Therefore, a sharp voltage change is obtained when the pulse waveform changes.

If the DC power supply has a power supply voltage V, the transformer has a winding ratio n and a primary inductance value L1, and a current flowing through a primary winding of the transformer is cut off at a rate (di/dt), then the pulse output in the period during which the switch is turned on has a pulse voltage determined by nV, and the pulse of opposite polarity has a pulse voltage determined by nL1(di/dt).

As the integral value of the pulse of positive polarity or the integral value of the pulse of negative polarity and the pulse of opposite polarity are substantially equal to each other, any residual fluxes in the transformer can substantially be reset. Accordingly, the size of the transformer can be reduced.

The pulse generating circuit thus arranged may further comprise a capacitor connected in parallel to the switch. The operating burden on the semiconductor switch used as the switch may be reduced. As a result, a switching loss of the semiconductor switch can be reduced and a current cutoff resistance thereof can be increased. Particularly, the increased current cutoff resistance results in a larger capacity if the pulse generating circuit is constructed as a pulse power supply.

If the semiconductor switch cuts off a current at a high speed or cuts off a large current, a large surge voltage due to the exciting inductance of the primary winding of the transformer is applied to the semiconductor switch. However, the capacitor connected in parallel to the semiconductor switch can reduce the surge voltage, thereby making the semiconductor switch more reliable.

Depending on the semiconductor switch used, a rate (dv/dt) at which the voltage increases when it is turned off may not be substantially increased. With the capacitor being connected, however, the voltage increasing rate (dv/dt) can be adjusted to a level that is allowed by the semiconductor switch used by the capacitance of the capacitor.

Because much of the energy remaining in the capacitor is recovered into the DC power supply, any reduction in efficiency due to the connected capacitor is small.

If a capacitive load is connected across the secondary winding, then the pulse generating circuit may further comprise a diode connected in parallel to the switch in a reverse orientation. With this arrangement, remaining energy in the transformer, e.g., excessive energy (unused energy) in a load connected across the secondary winding of the transformer, is returned to the DC power supply, and contributes to an increase in the efficiency of the DC power supply.

As described above, the pulse generating circuit according to the present invention is effective in reducing the number of parts used and is capable of obtaining a sharp voltage change when the pulse waveform is changed.

### BRIEF DESCRIPTION OF THE DRAWINGS

FIG. 1 is a circuit diagram of a pulse generating circuit according to an embodiment of the present invention;
FIGS. 2A through 2C are waveform diagrams showing circuit operation of the pulse generating circuit according to the embodiment;
FIG. 3 is a circuit diagram of a pulse generating circuit according to a first modification;
FIG. 4 is a circuit diagram of a pulse generating circuit according to a second modification;
FIG. 5 is a circuit diagram of a pulse generating circuit according to a third modification;
FIG. 6 is a circuit diagram of a conventional pulse generating circuit; and
FIG. 7 is a waveform diagram showing an output voltage of the conventional pulse generating circuit.

### BEST MODE FOR CARRYING OUT THE INVENTION

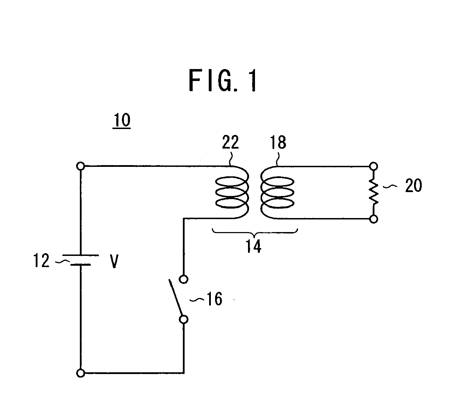

Pulse generating circuits according to embodiments of the present invention will be described below with reference to FIGS. 1 through 5.

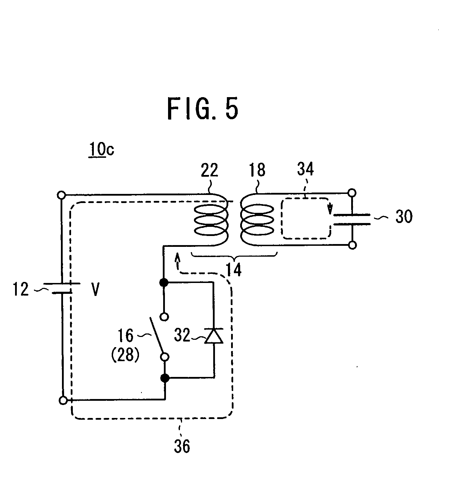

As shown in FIG. 1, a pulse generating circuit 10 according to an embodiment has a DC power supply 12 (power supply voltage = V), and a transformer 14 and a switch 16 which are connected in series across the DC power supply 12, and produces an output across a secondary winding 18 of the transformer 14. As shown in FIG. 1, a resistive load 20 is connected across the secondary winding 18, or, as shown in FIG. 5, a capacitive load 30 is connected across the secondary winding 18.

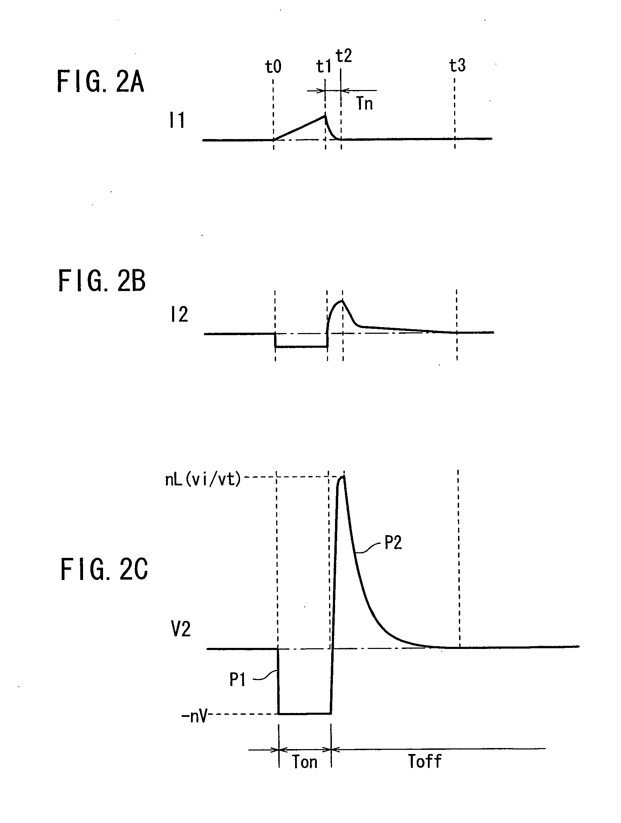

Circuit operation of the pulse generating circuit 10 according to the embodiment, particularly with the resistive load 20 connected across the secondary winding 18, will be described below with reference to the circuit diagram shown in FIG. 1 and waveform diagrams shown in FIGS. 2A through 2C.

When the switch 16 is turned on at time to, a voltage which is essentially the same as the voltage V of the DC power supply 12 is applied to the transformer 14. If the transformer 14 has a primary inductance L1, then as shown in FIG. 2A, a current I1 flowing through the primary winding 22 of the transformer 14 increases linearly with time at a gradient (V/L1).

During a period Ton while the switch 16 is being turned on, a constant negative voltage (negative pulse P1) is output across the secondary winding 18. If the power supply voltage of the DC power supply 12 is represented by V and the winding ratio of the transformer 14 (the number n2 of turns of the secondary winding 18/the number n1 of turns of the primary winding 22) by n, then an output voltage V2 appearing across the secondary winding 18 has a level -nV (V2 = -nV). During the period Ton, a current I2 flowing through the secondary winding 18 has a waveform similar to the negative pulse P1 (see FIG. 2B).

Subsequently, the switch 16 is turned off at time t1, starting to discharge electric energy into resistive load 20. Specifically, the output voltage V2 sharply rises due to electromotive forces induced by the transformer 14, outputting a voltage (positive pulse P2) of opposite polarity (positive) having a positive voltage value as a peak value. Ideally, the output voltage V2 should have a peak value at the time the switch 16 is turned off. However, since the current I2 flowing through the secondary winding 18 rises slightly slowly due to the exciting inductance of the transformer 14, the peak of the output voltage V2 occurs at time t2 which is slightly later than time t1 when the switch 16 is turned off. During a short time Tn from time t1 when the switch 16 is turned off to time t2 when the output voltage V2 has a peak value, the output voltage V2 sharply increases from the negative voltage value to the positive voltage value (peak value). Therefore, the time lag (period Tn) is almost negligible.

The peak value of the output voltage V2, i.e., the peak value of the positive pulse P2, is represented by nL1(di/dt) where L1 represents the primary inductance of the transformer 14 and (di/dt) represents the rate at which the current I1 flowing through the primary winding 22 of the transformer 14 is cut off. After time t2 when the output voltage V2 has its peak value, since the energy is consumed by the resistive load 20, the output voltage V2 is gradually attenuated until it reaches a reference level (0V) at time t3 in a period Toff during which the switch 16 is turned off. The output voltage V2 is attenuated such that the integral value of the negative pulse P1 and the integral value of the positive pulse P2 are substantially equal to each other.

As described above, the pulse generating circuit 10 according to the present embodiment has the transformer 14 and the single switch 16 which are connected in series across the DC power supply 12, and produces the output (output voltage V2) across the secondary winding 18 of the transformer 14. Therefore, the negative pulse P1 is output in the period Ton during which the switch 16 is turned on, and, when the switch 16 is turned off, the pulse P2 of opposite polarity (positive pulse) is output due to electromotive forces induced by the transformer 14.

According to the present embodiment, since the negative pulse P1 changes to the positive pulse P2 when the single switch 16 is operated, the number of parts used is greatly reduced, and no dead time is provided when the pulse changes. Therefore, a sharp voltage change is obtained when the pulse waveform changes.

Inasmuch as the integral value of the negative pulse P1 and the integral value of the positive pulse P2 are substantially equal to each other, any residual fluxes in the transformer 14 can substantially be reset. Accordingly, the size of the transformer 14 can be reduced.

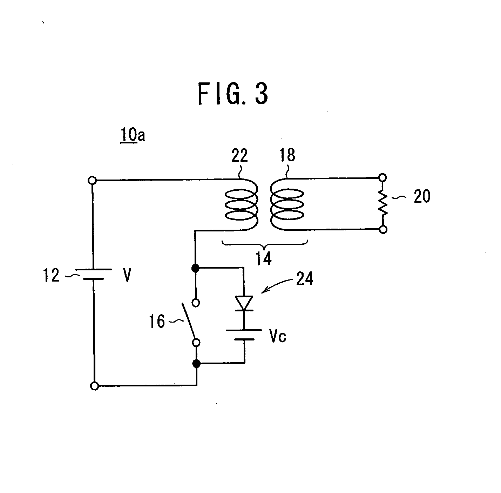

Some modifications of the pulse generating circuit 10 according to the present embodiment will be described below with reference to FIGS. 3 through 5.

As shown in FIG. 3, a pulse generating circuit 10a according to a first modification differs from the pulse generating circuit according to the embodiment in that an upper end clamp circuit 24 is connected in parallel to the switch 16. By setting a clamp voltage Vc of the clamp circuit 24 to nV1, for example, both the negative pulse P1 and the positive pulse P2 may be of substantially the same absolute value and may be of a substantially rectangular shape.

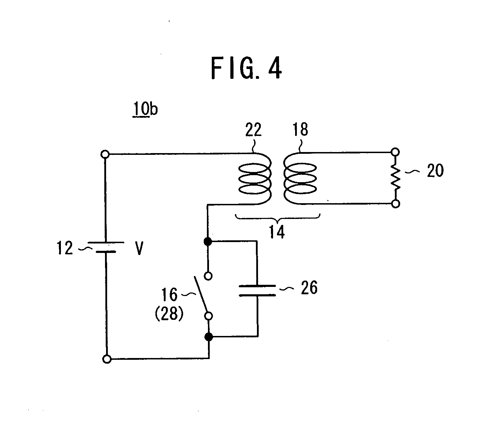

As shown in FIG. 4, a pulse generating circuit 10b according to a second modification differs from the pulse generating circuit according to the embodiment in that a capacitor 26 is connected in parallel to the switch 16. The pulse generating circuit 10b is preferable if a semiconductor switch 28 such as an SI thyristor or the like, for example, is used as the switch 16.

Specifically, for turning off the semiconductor switch 28, a current flowing from the anode terminal to the cathode terminal of the semiconductor switch 28 commutates from the anode terminal to the gate terminal, drawing charges remaining in the semiconductor switch 28 from the gate, whereupon the semiconductor switch 28 is turned off. At this time, the current flowing through the semiconductor switch 28 commutates to the path of the capacitor 26, reducing an operating burden on the semiconductor switch 28.

As a result, a switching loss of the semiconductor switch 28 can be reduced and a current cutoff resistance thereof can be increased. Particularly, the increased current cutoff resistance results in a larger capacity if the pulse generating circuit 10b is constructed as a pulse power supply. If the semiconductor switch 28 cuts off a current at a high speed or cuts off a large current, a large surge voltage due to the exciting inductance of the transformer 14 is applied to the semiconductor switch 28. However, the capacitor 26 connected in parallel to the semiconductor switch 28 can reduce the surge voltage, thereby making the semiconductor switch 28 more reliable.

Depending on the semiconductor switch 28 used, a rate (dv/dt) at which the voltage increases when it is turned off may not be substantially increased. With the capacitor 26 being connected, however, the voltage increasing rate (dv/dt) can be adjusted to a level that is allowed by the semiconductor switch 28 used by the capacitance of the capacitor 26.

Because much of the energy remaining in the capacitor 26 is recovered into the DC power supply 12, any reduction in efficiency due to the connected capacitor 26 is small.

In the modification shown in FIG. 4, the capacitor 26 is connected in parallel to the semiconductor switch 28. However, a parasitic capacitive component of the semiconductor switch 28 may double as the capacitor 26. By using the parasitic capacitive component, the capacitor 26 may be dispensed with, allowing the high-performance pulse generating circuit 10b to be reduced in size.

As shown in FIG. 5, a pulse generating circuit 10c according to a third modification differs from the pulse generating circuit according to the embodiment in that a capacitive load 30 such as a discharge gap or the like, for example, is connected across the secondary winding 18, and a diode 32 is connected in parallel to the switch 16 in a reverse orientation. The pulse generating circuit 10c is also preferable if a semiconductor switch 28 such as an SI thyristor or the like, for example, is used as the switch 16.

Specifically, when the semiconductor switch 28 is turned off, the current flowing through the primary winding 22 of the transformer 14 commutates to the capacitive load 30 through the transformer 14. At this time, a large pulse voltage is generated across the secondary winding 18, causing a discharge to occur in the capacitive load 30.

At this time, since the semiconductor switch 28 has a parasitic capacitive component, not all the commutating current flows into the capacitive load 30, but a current flows to charge the parasitic capacitive component of the semiconductor switch 28.

Though energy is consumed by the discharge in the capacitive load 30, not all the energy may be consumed or no discharge may occur and much energy may remain in the capacitive load 30.

In such a case, remaining charges are discharged through the exciting inductance of the transformer 14 (a current flow through the primary winding 22 of the transformer 14), moving energy again into the primary winding 22.

With the energy thus moved, charges stored in the capacitive load 30 are eliminated. When the energy has been moved into the primary winding 22, currents flow through two paths (first and second paths 34, 36). The first path 34 is a path extending toward the capacitive load 30 again, and the second path 36 is a path interconnecting the DC power supply 12, the diode 32, and the primary winding 22.

At this time, the voltage generated by the transformer 14 is clamped by voltages produced by the DC power supply 12 and the diode 32, and much current flows through the second path 36. The flow of the current through the second path 36 recovers energy into the DC power supply 12.

Therefore, excessive energy (unused energy) of the capacitive load 30 is returned to the DC power supply 12, and contributes to an increase in the efficiency of the DC power supply 12.

Practically, without the diode 32, the exciting inductance of the transformer 14 and the capacitive load 30 resonate with each other again, with the result that a reverse voltage in excess of the withstand voltage may possibly be applied to the semiconductor switch 28. Therefore, if the capacitive load 30 is connected across the secondary winding 18, the diode 32 should preferably be connected in parallel to the semiconductor switch 28 for processing the energy of the exciting inductance, as with the third modification.

The pulse generating circuit according to the present invention is not limited to the above embodiments, but may have various structures without departing from the gist of the invention.

## Claims

1. A pulse generating circuit for successively outputting a pulse of positive polarity and a pulse of negative polarity, comprising:
a transformer (14) and a single switch (16) which are connected in series across a DC power supply (12);
wherein an output is produced across a secondary winding (18) of said transformer (14).

2. A pulse generating circuit according to claim 1,
wherein either one of the pulse of positive polarity and the pulse of negative polarity is output in a period during which said switch (16) is turned on, and a pulse of opposite polarity is output due to electromotive forces induced when said switch (16) is turned off.

3. A pulse generating circuit according to claim 2,
wherein if said DC power supply (12) has a power supply voltage V, said transformer (14) has a winding ratio n and a primary inductance value L1, and a current flowing through a primary winding (22) of said transformer (14) is cut off at a rate (di/dt), then the pulse output in the period during which said switch (16) is turned on has a pulse voltage determined by nV, and the pulse of opposite polarity has a pulse voltage determined by nL1(di/dt).

4. A pulse generating circuit according to any one of claims 1 through 3, further comprising:
a capacitor (26) connected in parallel to said switch (16).

5. A pulse generating circuit according to any one of claims 1 through 4, wherein a capacitive load (30) is connected across said secondary winding (18), further comprising:
a diode (32) connected in parallel to said switch (16) in a reverse orientation.

6. A pulse generating circuit according to any one of claims 1 through 5, wherein said switch (16) comprises a semiconductor switch.
